# DEMANDE DE BREVET EUROPEEN

(11) **EP 0 731 004 A1**
(43) Date de publication de la demande: **11.09.1996**
(21) Numéro de dépôt: 96400496.4
(22) Date de dépôt: 08.03.1996
(51) Int. Cl.: B60R 22/46, B60R 22/18

(54) **Actionneur à déclenchement piloté de manoeuvre d'un organe par exemple de véhicule automobile**

(30) Priorité: 10.03.1995 FR 9502829
(71) Demandeur: ECIA - EQUIPEMENTS ET COMPOSANTS POUR L'INDUSTRIE AUTOMOBILE, F-25400 Audincourt (FR)
(72) Inventeur: Certain, Emmanuel, 90000 Belfort (FR); Duquesnoy, Daniel, 25400 Audincourt (FR)
(74) Mandataire: Habasque, Etienne Joel Jean-François

(57) **Abrégé**

Cet actionneur à déclenchement piloté de manoeuvre d'un organe par exemple de véhicule automobile, du type comportant un cylindre (2) dans lequel est disposé un piston (3) muni d'une tige d'actionnement (4) de l'organe, traversant une paroi d'extrémité du cylindre, ce piston délimitant avec le cylindre, une chambre (6), et un générateur de gaz pyrotechnique (7), en communication avec ladite chambre, est caractérisé en ce que la chambre (6) est ménagée entre le piston (3) et l'extrémité du cylindre opposée à celle à travers laquelle passe la tige de piston (4), pour provoquer un déplacement de celle-ci entre une position escamotée dans le cylindre et une position active en saillie à partir de ce cylindre, lors du déclenchement du générateur de gaz.

## Description

La présente invention concerne un actionneur à déclenchement piloté de manoeuvre d'un organe par exemple de véhicule automobile.

Plus particulièrement, l'actionneur selon l'invention peut être utilisé comme générateur d'effort dans des applications automobiles, par exemple dans les rétracteurs de sangles de ceintures de sécurité ou autres, dont le fonctionnement est déclenché en cas de choc pour protéger les occupants d'un véhicule automobile.

Les actionneurs connus dans l'état de la technique sont en général basés sur la libération d'un ressort où la mise à feu d'un système pyrotechnique de déplacement d'un organe de traction par exemple d'un élément d'accrochage de la sangle sur la structure du véhicule, pour tendre celle-ci.

C'est ainsi par exemple que ces actionneurs comportent un cylindre dans lequel est disposé un piston muni d'une tige d'actionnement de l'organe, traversant une paroi d'extrémité du cylindre, ce piston délimitant avec le cylindre, une chambre, et un générateur de gaz pyrotechnique raccordé à cette chambre.

En régle générale, cette chambre est ménagée entre le piston et l'extrémité du cylindre à travers laquelle passe la tige d'actionnement de l'organe, de sorte que lors du déclenchement du fonctionnement du générateur de gaz pyrotechnique, le piston et donc la tige de celui-ci se déplacent entre une première position dans laquelle la tige fait saillie à partir du cylindre et une position escamotée à l'intérieur de celui-ci, pour appliquer une force de traction sur l'organe.

Le but de l'invention est de proposer une variante de réalisation de ces actionneurs à déclenchement piloté.

A cet effet, l'invention a pour objet un actionneur à déclenchement piloté de manoeuvre d'un organe par exemple de véhicule automobile, du type comportant un cylindre, dans lequel est disposé un piston muni d'une tige d'actionnement de l'organe, traversant une paroi d'extrémité du cylindre, ce piston délimitant avec le cylindre, une chambre, et un générateur de gaz pyrotechnique, en communication avec ladite chambre, caractérisé en ce que la chambre est ménagée entre le piston et l'extrémité du cylindre opposée à celle à travers laquelle passe la tige de piston, pour provoquer un déplacement de celle-ci entre une position escamotée dans le cylindre et une position active en saillie à partir de ce cylindre, lors du déclenchement du générateur de gaz.

L'invention sera mieux comprise à la lecture de la description qui va suivre, donnée uniquement à titre d'exemple et faite en se référant aux dessins annexés, sur lesquels :
- les Fig.1 à 3 représentent des vues en coupe d'un premier exemple de réalisation d'un actionneur selon l'invention, illustrant les différentes phases de fonctionnement de celui-ci; et
- les Fig.4 à 6 représentent des vues en coupe d'un second exemple de réalisation d'un actionneur selon l'invention, illustrant les différentes phases de fonctionnement de celui-ci.

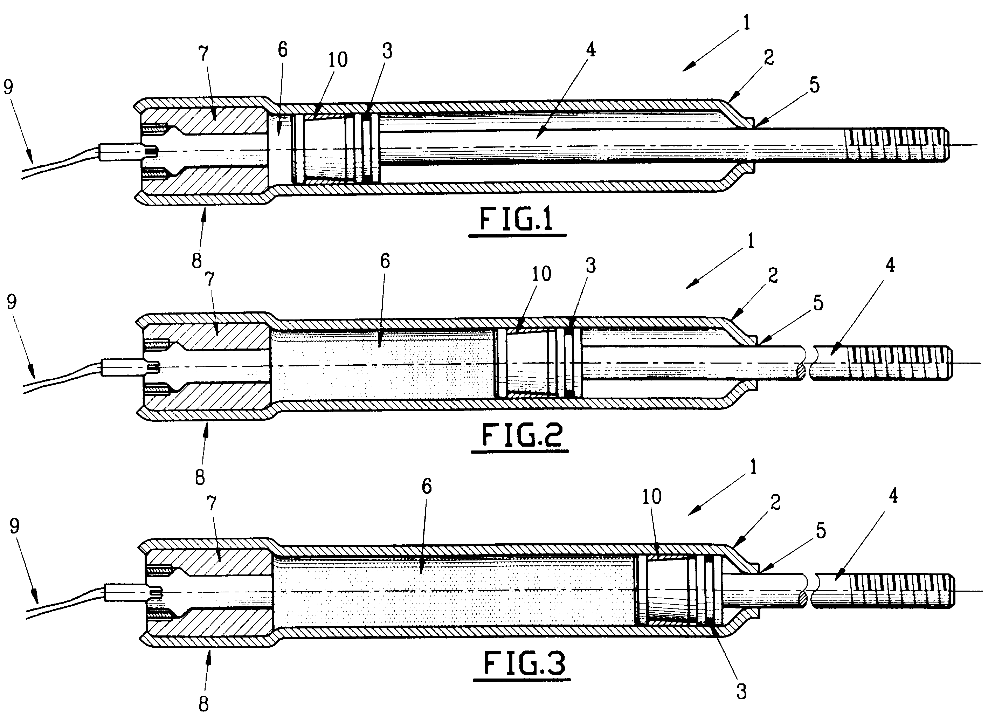

On reconnaît sur la figure 1, un actionneur à déclenchement piloté de manoeuvre d'un organe, par exemple d'un véhicule automobile, désigné de façon générale par la référence 1.

Cet actionneur comporte un cylindre désigné par la référence générale 2, dans lequel est disposé un piston désigné par la référence générale 3, ce piston étant muni d'une tige d'actionnement de l'organe, désignée par la référence générale 4.

Cette tige d'actionnement 4 traverse une paroi d'extrémité du cylindre, et passe par exemple dans un trou 5 de cette extrémité du cylindre, formé par un bord replié de cette extrémité du cylindre.

Le piston et le cylindre délimitent une chambre 6 et l'actionneur compte également un générateur de gaz pyrotechnique 7, en communication avec cette chambre.

Selon l'invention, la chambre 6 est ménagée à l'extrémité du cylindre 2 opposée à celle à travers laquelle passe la tige 4 du piston, pour provoquer comme cela est illustré sur ces figures, le déplacement du piston et donc de la tige d'actionnement reliée à celui-ci, entre une position escamotée dans le cylindre, représentée sur la figure 1 et une position active en saillie à partir du cylindre, comme cela est illustré sur la figure 3.

Dans l'exemple de réalisation représenté sur ces figures 1 à 3, le générateur de gaz pyrotechnique 7 est disposé dans une portion de plus grand diamètre 8 du cylindre 2, cette portion de plus grand diamètre du cylindre étant ménagée à l'extrémité de celui-ci opposée à celle traversée par la tige d'actionnement 4, de sorte que la chambre 6 est ménagée entre le piston et le générateur de gaz.

De manière classique, ce générateur de gaz pyrotechnique 7 est relié au reste des circuits électriques de sécurité du véhicule, par l'intermédiaire par exemple de fils électriques 9.

On conçoit alors que lors du déclenchement de ce générateur, du gaz est introduit dans la chambre 6 pour provoquer le déplacement du piston et de la tige de celui-ci afin de manoeuvrer l'organe correspondant du véhicule.

Il va de soi bien entendu que des moyens d'anti-retour peuvent être prévus entre le piston et le cylindre.

Ces moyens, désignés par la référence générale 10 sur ces figures, peuvent par exemple comporter une bague en forme de coin portée par le piston et adaptée pour coopérer avec la paroi interne du cylindre 2 et une portion de forme complémentaire du piston 3 pour éviter tout rebond de ce piston.

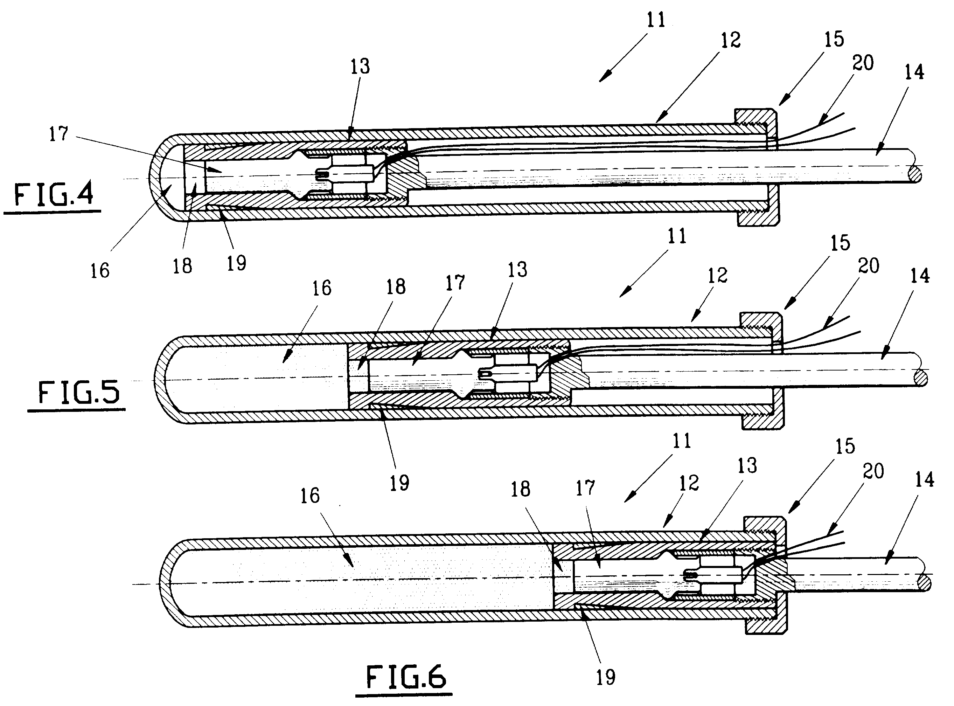

Dans l'exemple de réalisation représenté sur les figures 4 à 6, on reconnaît un actionneur 11 muni d'un cylindre 12, dans lequel est disposé un piston 13 muni d'une tige 14 d'actionnement d'un organe quelconque d'un véhicule, cette tige traversant une paroi d'extrémité du cylindre.

Cette paroi d'extrémité du cylindre est formée dans cet exemple de réalisation, par un capuchon 15 vissé sur le reste du cylindre et muni d'un trou de passage de la tige 14.

Par ailleurs, une chambre 16 est également ménagée entre le piston 13 et l'extrémité du cylindre opposée à celle fermée par le capuchon 15 et un générateur de gaz pyrotechnique 17 est également prévu dans cet actionneur, en communication avec cette chambre 16.

Dans cet exemple de réalisation, le générateur de gaz pyrotechnique 17 est porté par le piston 13 et communique avec la chambre par l'intermédiaire d'un conduit 18 ménagé dans ce piston.

Des moyens d'anti-retour 19 sont également prévus entre le piston et le cylindre et se présentent également par exemple sous la forme d'une bague en forme de coin interposée entre la paroi interne du cylindre et une portion de forme complémentaire de ce piston afin d'éviter tout rebond de celui-ci, cette bague étant portée par le piston.

Le générateur de gaz pyrotechnique est également raccordé par l'intermédiaire de fils électriques par exemple 20, au reste des circuits électriques de sécurité du véhicule pour permettre le déclenchement de celui-ci. Ces fils passent par exemple également dans le trou du capuchon 15.

On conçoit alors également que dans ce cas, lors du déclenchement du fonctionnement de ce générateur, du gaz est introduit dans la chambre 16 par l'intermédiaire du conduit 18 du piston 13, pour provoquer un déplacement du piston 13 et de la tige d'actionnement 14 de celui-ci entre la position escamotée représentée sur la figure 4 et la position active représentée sur la figure 6, dans laquelle la tige d'actionnement fait saillie à partir du cylindre.

Dans l'exemple de réalisation représenté sur ces figures 4 à 6, l'extrémité du cylindre 12 opposée à celle fermée par le capuchon vissé 15, et en regard du générateur de gaz, présente par exemple une forme hémisphérique permettant une bonne répartition des gaz dans la chambre 16 et donc sur le piston 13.

Il va de soi bien entendu que différents modes de réalisation de cet actionneur peuvent être envisagés.

## Revendications

1. Actionneur à déclenchement piloté de manoeuvre d'un organe par exemple de véhicule automobile, du type comportant un cylindre (2;12), dans lequel est disposé un piston (3;13) muni d'une tige d'actionnement (4;14) de l'organe, traversant une paroi d'extrémité du cylindre, ce piston délimitant avec le cylindre, une chambre (6;16) et un générateur de gaz pyrotechnique (7;17), en communication avec ladite chambre, caractérisé en ce que la chambre (6;16) est ménagée entre le piston (3;13) et l'extrémité du cylindre opposée à celle à travers laquelle passe la tige de piston (4;14), pour provoquer un déplacement de celle-ci entre une position escamotée dans le cylindre et une position active en saillie à partir de ce cylindre, lors du déclenchement du générateur de gaz.

2. Actionneur selon la revendication 1, caractérisé en ce que le générateur de gaz pyrotechnique (7) est disposé à l'extrémité du cylindre opposée à celle traversée par la tige d'actionnement (4), la chambre (6) étant ménagée entre ce générateur (7) et le piston (3).

3. Actionneur selon la revendication 2, caractérisé en ce que le générateur de gaz pyrotechnique (7) est disposé dans une partie (8) de plus grand diamètre de l'extrémité correspondante du cylindre (2).

4. Actionneur selon l'une quelconque des revendications précédentes, caractérisé en ce que l'extrémité du cylindre (2) traversée par la tige d'actionnement (4) comporte un bord replié délimitant un trou (5) de passage de cette tige.

5. Actionneur selon la revendication 1, caractérisé en ce que le générateur de gaz pyrotechnique (17) est porté par le piston (13).

6. Actionneur selon la revendication 5, caractérisé en ce que l'extrémité du cylindre (12) en regard du générateur porté par le piston, présente une forme hémisphérique.

7. Actionneur selon la revendication 5 ou 6, caractérisé en ce que le piston (13) comporte un conduit (18) de mise en communication du générateur de gaz pyrotechnique (17) et de la chambre (16).

8. Actionneur selon l'une quelconque des revendications 5,6 ou 7, caractérisé en ce que l'extrémité du cylindre (12) traversée par la tige d'actionnement (14) est obturée par un capuchon (15) vissé sur le reste du cylindre (12) et muni d'un trou de passage de la tige (14).

9. Actionneur selon l'une quelconque des revendications précédentes, caractérisé en ce que des moyens d'anti-retour (10;19) sont prévus entre le piston et le cylindre.

10. Actionneur selon la revendication 9, caractérisé en ce que les moyens d'anti-retour (10;19) comprennent une bague en forme de coin portée par le piston et disposée entre le cylindre et une portion de forme complémentaire du piston pour éviter tout rebond du piston dans le cylindre.
